# FASCICULE DE BREVET EUROPEEN

(11) **EP 1 207 093 B1**
(45) Date de publication et mention de la délivrance du brevet: **20.07.2005**
(21) Numéro de dépôt: 01402946.6
(22) Date de dépôt: 16.11.2001
(51) Int. Cl.: B62D 1/187

(54) **Habillage pour colonne de direction**
Lenksäulenverkleidung
Steering column cover

(30) Priorité: 17.11.2000 FR 0014820
(43) Date de publication de la demande: 22.05.2002
(73) Titulaire: Renault s.a.s., 92100 Boulogne Billancourt (FR)
(72) Inventeur: Gallinato Contino, Roland, 83780 Flayosc (FR)

(56) Documents cités:
- EP-A- 0 838 387

## Description

La présente invention concerne un habillage pour une colonne de direction réglable axialement et en hauteur, lequel habillage est constitué d'un premier élément solidaire de la colonne de direction, et d'un second élément mobile par rapport au premier élément, afin qu'il soit totalement recouvrant à partir de la planche de bord, quelle que soit la position de ladite colonne de direction.

Un habillage pour colonne de direction de ce type est divulgué dans la demande de brevet européen EP 0 838 387 au nom de OPEL ADAM AG. Il comporte un premier élément fixé sur la colonne de direction, et un second élément monté coulissant dans la planche de bord selon un axe correspondant à celui de la colonne de direction en position neutre (médiane entre ses position haute et basse). Le premier élément comporte latéralement des pistes ayant des profils sensiblement en arcs de cercle centrés sur l'axe transversal de pivotement en hauteur de la colonne de direction, sur lesquelles restent en contact permanent des éléments d'appui du second élément, sous l'effet d'une force de ressort sollicitant le second élément en déplacement vers le premier élément. Dans leurs parties adjacentes supérieurement et inférieurement, les deux éléments de l'habillage comportent des retours de parois qui glissent les uns sur les autres de façon étanche lorsque la colonne de direction est déplacée en hauteur, de sorte qu'à la jonction entre les deux éléments, l'habillage reste fermé en permanence.

Cet habillage, dont une des raisons d'être est l'esthétique, présente l'inconvénient de laisser nettement visibles les moyens de guidage latéraux qui, de plus, occupent un certain espace dans cette zone plutôt encombrée du véhicule. De plus, ledit second élément n'ayant qu'une aptitude de déplacement axial, le fait qu'intérieurement il doive autoriser les déplacement en hauteur de la colonne de direction oblige à le prévoir spacieux en conséquence, autrement dit relativement volumineux.

Le but de la présente invention a été de concevoir un nouvel habillage pour colonne de direction qui soit efficace, de structure simple et esthétique, et d'encombrement réduit.

Elle concerne un dispositif d'habillage pour colonne de direction réglable axialement et en hauteur, associé à la planche de bord d'un véhicule, comprenant un premier élément monté solidaire de la colonne de direction et un second élément monté dans la planche de bord, lequel dispositif d'habillage est caractérisé selon l'invention en ce que les deux éléments sont agencés aptes à coulisser l'un dans l'autre, en ce que ledit second élément est monté dans la planche de bord apte à pivoter autour d'un axe transversal, en ce que la planche de bord comporte des pans haut et bas, en ce que ledit second élément comporte des bords supérieur et inférieur adjacents aux pans haut et bas et en ce que lors des déplacements en pivotement dudit second élément autour dudit axe transversal, les pans haut et bas et les bords supérieur et inférieur sont agencés pour que le bord supérieur suive le pan haut en restant à proximité immédiate de ce dernier et le pan bas suive le bord inférieur en restant à proximité immédiate de ce dernier.

Selon des caractéristiques préférentielles de l'invention :
- lesdits pans haut et bas de la planche de bord présentent en section longitudinale des courbures sensiblement circulaires centrées sur ledit axe transversal ;
- ledit second élément coulisse dans le premier élément.

Dans une forme de réalisation préférée de l'invention, ledit second élément est articulé autour de son axe de pivotement transversal dans la planche de bord.

Dans une autre forme de réalisation préférée de l'invention, ledit second élément est articulé de manière à pouvoir pivoter autour d'un axe transversal correspondant sensiblement à l'axe de pivotement pour réglage en hauteur de la colonne de direction, par l'intermédiaire de tétons latéraux engagés dans des fentes en arcs de cercle sensiblement centrés sur ledit axe transversal, et des moyens de guidage le maintenant aligné longitudinalement avec ledit premier élément.

Ces caractéristiques et avantages de l'invention, ainsi que d'autres, apparaîtront plus clairement dans la description suivante et les dessins joints, dans lesquels :
la Fig. 1 est une vue schématique en coupe longitudinale d'une première forme de réalisation d'habillage de colonne de direction selon l'invention, le représentant en place sur une planche de bord ;
la Fig. 2 est une vue schématique en perspective des premier et second éléments de l'habillage de la Fig. 1, représentés seuls ;
la Fig. 3 est une vue schématique en perspective, similaire à la Fig. 2, des premier et second éléments d'une autre forme de réalisation d'habillage selon l'invention, également représentés seuls ; et
la Fig. 4 est une vue de détail en coupe selon la ligne IV-IV de la Fig. 3.

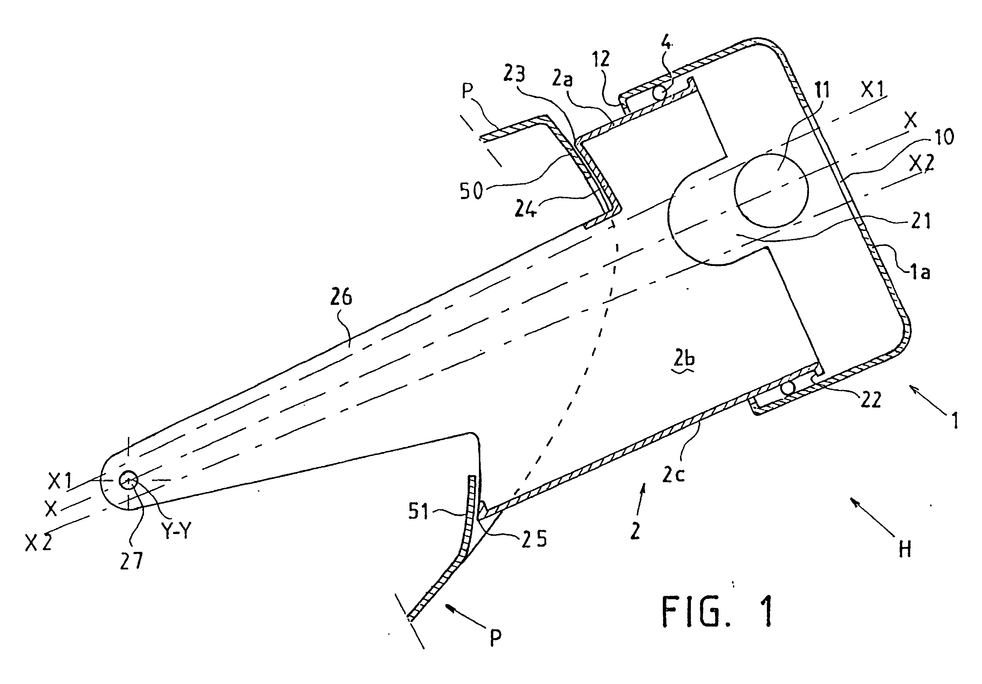

Considérant d'abord la Fig. 1, elle illustre schématiquement, en place sur une planche de bord P, une première forme d'habillage selon l'invention pour une colonne de direction réglable longitudinalement selon son axe, et réglable également en hauteur. Elle n'apparaît ici que par son axe longitudinal, en ses positions de réglage en hauteur médiane X-X et extrêmes haute X1-X1 et basse X2-X2, entre lesquelles elle se règle par pivotement autour d'un axe transversal qui se trouve ici hors du cadre du dessin.

L'habillage selon l'invention, désigné globalement par la référence H, comprend un premier élément 1 fixé sur la colonne de direction, et un second élément 2 monté pivotant dans la planche de bord P et engagé dans le premier élément 1 de manière à pouvoir y coulisser longitudinalement, autrement dit ici selon l'axe de la colonne de direction.

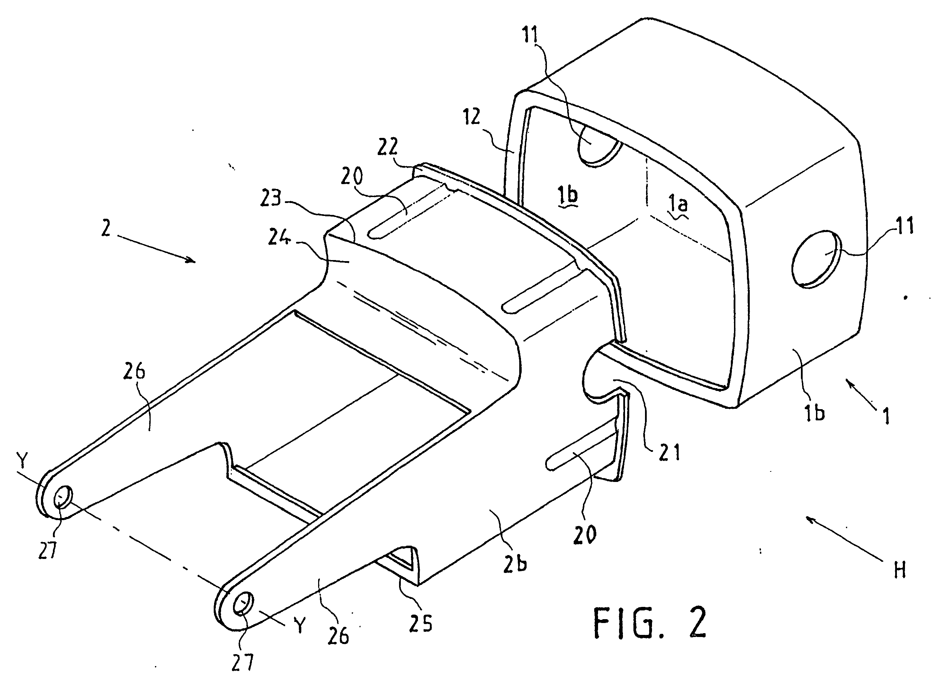

Considérant plus spécialement la Fig. 2, on voit que le premier élément 1 a la forme générale d'une cuvette parallélépipédique, dont la paroi de fond la présente une ouverture 10, Fig. 1, au niveau de laquelle il est fixé sur la colonne de direction, et dont les deux parois latérales 1b présentent une ouverture 11 pour le passage des différentes manettes de commande.

Le premier élément 1 est donc ouvert face au pied de la colonne de direction pour recevoir par emboîtement le corps de section complémentaire du second élément 2 d'une manière telle que celui-ci puisse y coulisser de façon télescopique. A cet -effet, sont avantageusement prévus des moyens favorisant le coulissement, s'agissant dans l'exemple représenté de billes 4 engagées dans des gorges de réception longitudinales telles que 20, Fig. 2, formées dans la paroi d'au moins un des éléments 1 et 2, et enfermées d'autre part par des rebords d'extrémité des éléments 1 et 2, respectivement 12 et 22.

Le corps du second élément 2 est globalement une portion de tube ouverte à ses deux extrémités pour le passage de la colonne de direction, de même section que celle du premier élément 1, dont les parois latérales 2b présentent, du côté du premier élément 1, des échancrures 21 alignées avec les ouvertures 11, et se prolongent à l'opposé en des bras 26 articulés en leurs extrémités autour d'un axe de pivotement Y-Y orienté transversalement. Tels que représentés, les bras 26 présentent à cet effet des ouvertures circulaires 27 destinées à recevoir des tétons faisant partie de la planche de bord P.

D'autre part, en regard de la planche de bord P, la paroi supérieure 2a du second élément 2 se termine en un bord 23 qui, lors des mouvements de pivotement autour de Y-Y, reste à proximité immédiate d'un pan 50 de la planche de bord P, et de même la paroi inférieure 2c comporte un bord 25 restant à proximité immédiate d'un second pan 51 de la planche de bord P. De préférence, les pans 50 et 51 présentent en section verticale longitudinale une courbure circulaire centrée sur Y-Y. De préférence également, et comme représenté, la paroi supérieure 2a est prolongée au-delà de son bord 23 par un pan de retour 24 dirigé-- vers l'intérieur, qui épouse la forme du pan 50 et glisse sur celui-ci lors des mouvements de pivotement autour de Y-Y.

Ainsi, lors du réglage en longueur de la colonne de direction, le second élément 2 reste pratiquement immobile, seul le premier élément 1 se déplaçant longitudinalement en coulissant sur lui ; tandis que lors du réglage en hauteur de la colonne de direction, le premier élément 1 se déplaçant solidairement avec elle entraîne le second élément en pivotement autour de l'axe Y-Y. La présence des bras 26 en bout des parois latérales 2b du second élément 2 permet de rapprocher l'axe Y-Y de l'axe de pivotement en hauteur de la colonne de direction, afin de minimiser les légers désalignements apparaissant entre les premier et second éléments 1 et 2 à mesure que la colonne de direction est écartée de la position de réglage en hauteur médiane X-X vers l'une ou l'autre des positions extrêmes X1-X1 et X2-X2.

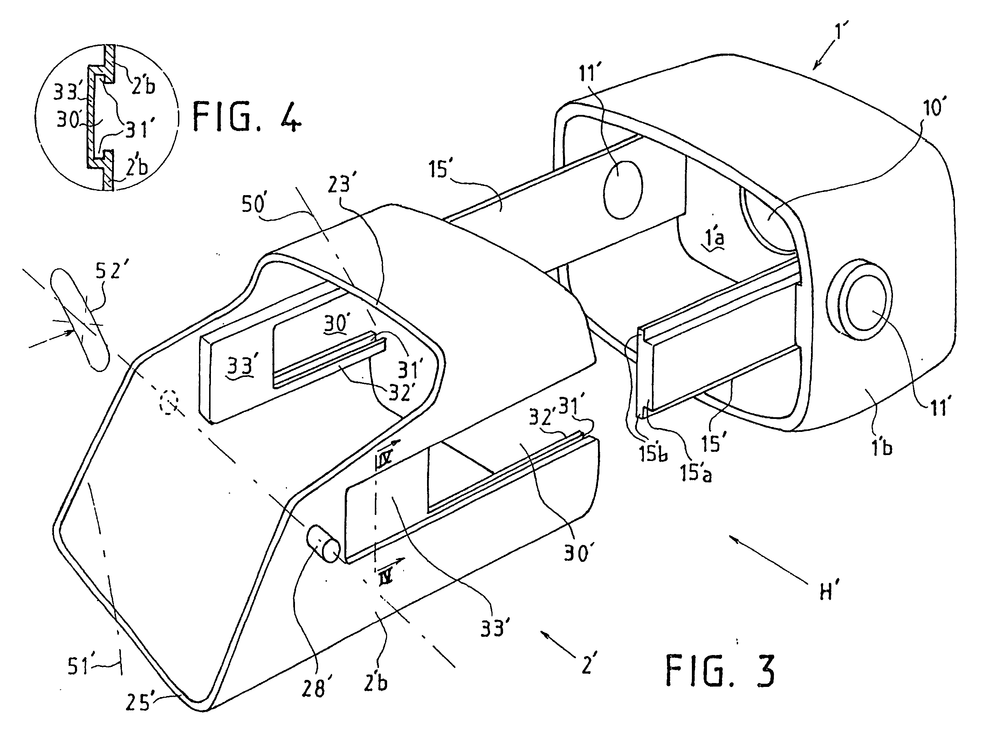

La Fig. 3 illustre un autre exemple de réalisation de l'invention dans laquelle les premier et second éléments 1' et 2' de l'habillage H' conservent entre eux le même alignement, indépendamment de la position de réglage en hauteur de la colonne de direction. Pour ce faire, le mouvement de pivotement du second élément 2' n'a plus lieu autour d'un axe de pivotement distant de l'axe de pivotement en hauteur de la colonne de direction, mais sensiblement autour de cet axe lui-même.

Le premier élément 1' a globalement la même forme que l'élément 1, et il comporte des mêmes éléments désignés par les mêmes références assorties du signe prime. Par contre, il est dépourvu d'un rebord le long de son ouverture, homologue du rebord 12.

En revanche, il comporte de chaque côté des bras longitudinaux ou réglettes de coulissement 15' destinées à coopérer avec des rails de guidage du second élément 2' pour maintenir positivement et de façon précise l'alignement longitudinal des éléments 1' et 2'. Les réglettes se prolongent intérieurement le long des parois latérales 1'b, jusqu'à la paroi de fond 1'a. Dans l'exemple représenté, étant donné leur position médiane en hauteur, elles sont traversées par les ouvertures 11' de passage des diverses manettes de commande.

Comme le second élément 2, le second élément 2' a globalement la forme d'un tube ouvert aux deux extrémités et de section complémentaire de celle du premier élément 1' pour s'emboîter intimement à l'intérieur de celui-ci avec la possibilité d'y coulisser de façon télescopique.

Il ne comporte pas d'homologues des bras 26, étant articulé dans la planche de bord qui le reçoit au niveau même de ses parois latérales 2'b. L'articulation dans la planche de bord consiste en des tétons latéraux tels que 28' engagés dans des fentes oblongues 52' le long desquelles ils peuvent se déplacer, les fentes 52' étant allongées selon les arcs de cercle dans des plans longitudinaux verticaux centrés sensiblement sur l'axe de pivotement en hauteur de la colonne de direction. Bien entendu, à l'inverse de ce qui a été représenté à la Fig. 3, les tétons d'articulation peuvent se trouver dans la planche de bord et les fentes de réception dans les parois latérales 2'b du second élément 2'.

Les parois latérales 2'b comportent d'autre part des moyens de réception des réglettes de coulissement 15', s'agissant de chaque côté de rails intérieurs longitudinaux haut et bas, respectivement le long du bord supérieur et du bord inférieur d'une fente longitudinale 30'. Chaque rail forme une gorge 31' entre le bord correspondant de la paroi 2'b le long de la fente 30' et un rebord intérieur 32'. Les gorges 31' de même côté reçoivent les bords haut et bas 15'b d'une réglette 15', lesquels sont amincis par rapport à la partie médiane 15'a de la réglette, de manière que celle-ci vienne occuper l'épaisseur de la fente 30', en venant sensiblement à fleur avec la surface extérieure de la paroi 2'b.

A noter la présence d'un voile de matière 33' dans la partie fermée d'extrémité de chaque fente 30', qui réunit les bords intérieurs 32' des deux gorges haute et basse 31', Fig. 4. En permettant à la réglette 15' de passer devant lui, le voile 33' assure avec celle-ci la fermeture complète de la fente 30' sur la plage entière de coulissement fonctionnel entre les deux éléments 1' et 2'.

Lors du réglage en hauteur de la colonne de direction, celle-ci, le premier élément 1' et le second élément 2' se déplacent donc en pivotement d'un seul bloc, l'articulation constituée par les tétons 28' et les fentes 52' ne faisant que retenir l'élément 2' d'une façon telle que ses bords supérieur 23' et inférieur 25' restent à proximité immédiate de pans correspondants de la planche de bord, symbolisés par les lignes en traits interrompus 50' et 51' à la Fig. 3, et qui de préférence présentent eux aussi en section longitudinale verticale des courbures circulaires centrées sur l'axe de pivotement en hauteur de la colonne de direction.

## Revendications

1. Dispositif d'habillage pour colonne de direction réglable axialement et en hauteur, associé à la planche de bord (P) d'un véhicule, comprenant un premier élément (1 ; 1') monté solidaire de la colonne de direction et un second élément (2 ; 2') monté dans la planche de bord, **caractérisé en ce que** les deux éléments (1, 2 ; 1', 2') sont agencés aptes à coulisser l'un dans l'autre, **en ce que** ledit second élément (2 ; 2') est monté dans la planche de bord apte à pivoter autour d'un axe transversal, **en ce que** la planche de bord comporte des pans haut (50 ; 50') et bas (51 ; 51') **en ce que** ledit second élément (2 ; 2') comporte des bords supérieur (23 ;23') et inférieur (25 ; 25') adjacents aux pans haut (50 ; 50') et bas (51 ; 51') **et en ce que** lors des déplacements en pivotement dudit second élément autour dudit axe transversal, les pans haut (50 ; 50') et bas (51 ; 51') et les bords supérieur (23 ;23') et inférieur (25 ; 25') sont agencés pour que le bord supérieur (23 ;23') suive le pan haut (50 ; 50') en restant à proximité immédiate de ce dernier et le pan bas (51 ; 51') suive le bord inférieur (25 ; 25') en restant à proximité immédiate de ce dernier.

2. Dispositif d'habillage pour colonne de direction selon la revendication 1, **caractérisé en ce que** lesdits pans haut (50 ; 50') et bas (51 ; 51') de la planche de bord présentent en section longitudinale des courbures sensiblement circulaires centrées sur ledit axe transversal.

3. Dispositif d'habillage pour colonne de direction selon la revendication 1 ou 2, **caractérisé en ce que** le second élément (2 ; 2') coulisse dans le premier élément (1 ; 1').

4. Dispositif d'habillage pour colonne de direction selon l'une des revendications 1 à 3, **caractérisé en ce que** le second élément (2) est articulé autour de son axe de pivotement transversal (Y-Y) dans la planche de bord (P).

5. Dispositif d'habillage pour colonne de direction selon la revendication 4, **caractérisé en ce que** le second élément (2) comporte une partie principale prolongée dans la planche de bord (P) par des bras latéraux (26) en extrémité desquels il est articulé sur son axe de pivotement (Y-Y).

6. Dispositif d'habillage pour colonne de direction selon la revendication 4 ou 5, **caractérisé en ce qu'**il comprend des billes (4) entre les parois en regard des éléments (1, 2), engagées dans des gorges longitudinales (20) formées dans l'une au moins desdites parois en regard, pour favoriser le coulissement entre les éléments (1, 2).

7. Dispositif d'habillage pour colonne de direction selon l'une des revendications 1 à 3, **caractérisé en ce que** le second élément (2') est articulé de manière à pouvoir pivoter autour d'un axe transversal correspondant sensiblement à l'axe de pivotement pour réglage en hauteur de la colonne de direction, par l'intermédiaire de tétons latéraux (28') engagés dans des fentes (52') en arcs de cercle sensiblement centrés sur ledit axe transversal, et des moyens de guidage le maintenant aligné longitudinalement avec le premier élément (1').

8. Dispositif selon la revendication 7, **caractérisé en ce que** lesdits moyens de guidage pour maintenir l'alignement longitudinal entre les premier et second éléments (1', 2') comprennent des réglettes latérales de coulissement (15') du premier élément (1') destinées à coopérer avec des rails de guidage du second élément, lesquelles réglettes (15') se prolongent intérieurement le long des parois latérales (1'b) ; lesdits rails de guidage étant de chaque côté des rails intérieurs haut et bas formés respectivement le long du bord supérieur d'une fente longitudinale (30') dans la paroi latérale (2'b) du second élément (2'), lesdits rails présentant une gorge (31') limitée intérieurement par un rebord (32').

9. Dispositif d'habillage pour colonne de direction selon la revendication 8, **caractérisé en ce que** la partie d'extrémité fermée de chacune des deux fentes (30') comporte un voile de matière (33') réunissant les rebords (32') desdites gorges haute et basse (31') tout en permettant le passage devant lui de la réglette de coulissement associée (15').

10. Dispositif d'habillage pour colonne de direction selon la revendication 8 ou 9, **caractérisé en ce que** les ouvertures (11') de passage des manettes de commande dans les parois latérales (1'b) de l'élément (1') traversent les réglettes de coulissement (15').

## Patentansprüche

1. Verkleidungsvorrichtung für eine Lenksäule, welche axial und in der Hohe einstellbar ist, die dem Armaturenbrett (P) eines Fahrzeuges hinzugefügt ist, aufweisend ein erstes Element (1; 1'), welches fest mit der Lenksäule verbunden montiert ist, und ein zweites Element (2; 2'), welches in dem Armaturenbrett montiert ist, **dadurch gekennzeichnet, dass** die zwei Elemente (1, 2; 1', 2') derart angeordnet sind, dass sie fähig sind, ineinander zu gleiten, dass das zweite Element (2; 2') in dem Armaturenbrett derart montiert ist, dass es fähig ist, um eine transversale Achse zu schwenken, dass das Armaturenbrett obere Wandabschnitte (50; 50') und untere Wandabschnitte (51; 51') aufweist, dass das zweite Element (2; 2') obere Ränder (23; 23') und untere Ränder (25; 25') benachbart zu den oberen Wandabschnitten (50; 50') und unteren Wandabschnitten (51; 51') aufweist und dass während der Schwenk-Verstellung des zweiten Elementes um die transversale Achse die oberen Wandabschnitte (50; 50') und die unteren Wandabschnitte (51; 51') und die oberen Ränder (23; 23') und unteren Ränder (25; 25') derart angeordnet sind, dass der obere Rand (23; 23') dem oberen Wandabschnitt (50; 50') folgt unter einem Verbleiben in unmittelbarer Nähe dieses letzteren und der untere Wandabschnitt (51; 51') dem unteren Rand (25; 25') folgt unter einem Verbleiben in unmittelbarer Nähe dieses letzteren.

2. Verkleidungsvorrichtung für eine Lenksäule nach Anspruch 1, **dadurch gekennzeichnet, dass** die oberen Wandabschnitte (50; 50') und die unteren Wandabschnitte (51; 51') des Armaturenbrettes im Querschnitt im Wesentlichen kreisförmige, longitudinale Krümmungen aufweisen, welche bezogen auf die transversale Achse zentriert sind.

3. Verkleidungsvorrichtung für eine Lenksäule nach Anspruch 1 oder 2, **dadurch gekennzeichnet, dass** das zweite Element (2; 2') in dem ersten Element (1; 1') gleitet.

4. Verkleidungsvorrichtung für eine Lenksäule nach einem der Ansprüche 1 bis 3, **dadurch gekennzeichnet, dass** das zweite Element (2) in dem Armaturenbrett (P) um seine transversale Schwenkachse (Y-Y) angelenkt ist.

5. Verkleidungsvorrichtung für eine Lenksäule nach Anspruch 4, **dadurch gekennzeichnet, dass** das zweite Element (2) einen Hauptteil aufweist, der in dem Armaturenbrett (P) durch seitliche Arme (26) verlängert ist, an deren Enden er an seiner Schwenkachse (Y-Y) angelenkt ist.

6. Verkleidungsvorrichtung für eine Lenksäule nach Anspruch 4 oder 5, **dadurch gekennzeichnet, dass** sie Kugeln (4) zwischen den Wänden gegenüberliegend der Elemente (1, 2) aufweist, die in longitudinale Nuten (20) eingreifen, welche in mindestens einer der gegenüberliegenden Wände ge*bildet sind, um das Gleiten zwischen den Elementen (1, 2) zu begünstigen.

7. Verkleidungsvorrichtung für eine Lenksäule nach einem der Ansprüche 1 bis 3, **dadurch gekennzeichnet, dass** das zweite Element (2') derart angelenkt, um um eine transversale Achse schwenken zu können, welche im Wesentlichen der Schwenkachse für die Einstellung der Höhe der Lenksäule entspricht, über seitliche Ansätze (28'), die in kreisbogenförmigen Spalten (52'), welche im Wesentlichen an der transversalen Achse zentriert sind, in Eingriff stehen, und Führungsmittel, welche es longitudinal mit dem ersten Element (1') ausgerichtet halten.

8. Vorrichtung nach Anspruch 7, **dadurch gekennzeichnet, dass** die Führungsmittel zum Aufrechterhalten der longitudinalen Ausrichtung zwischen dem ersten und dem zweiten Element (1', 2') seitliche Gleitleisten (15') des ersten Elements (1') aufweisen, die dafür bestimmt sind, mit Führungsschienen des zweiten Elementes zusammenzuwirken, wobei die Leisten (15') sich nach innen entlang der seitlichen Wände (1'b) erstrecken; wobei die Führungsschienen von jeder Seite der oberen und unteren inneren Schienen jeweils entlang des oberen Randes eines longitudinalen Spaltes (30') in der seitlichen Wand (2'b) des zweiten Elementes (2') gebildet sind, wobei die Schienen eine Rille (31') aufweisen, welche innen durch einen Rand (32') begrenzt ist.

9. Verkleidungsvorrichtung für eine Lenksäule nach Anspruch 8, **dadurch gekennzeichnet, dass** der geschlossene Endteil jeder der zwei Spalten (30') eine Materialumhüllung (33') aufweist, welche die Ränder (32') der oberen Rille und unteren Rille (31') vereinigt unter einem Ermöglichen des Hindurchgehens der zugehörigen Gleitleiste (15') vor ihr.

10. Verkleidungsvorrichtung für eine Lenksäule nach Anspruch 8 oder 9, **dadurch gekennzeichnet, dass** die Durchgangsöffnungen (11') von Steuerungs-Handhaben in den seitlichen Wänden (1'b) des Elements (1') die Gleitleisten (15') durchqueren.

## Claims

1. A sheathing device for a steering column, which may be adjusted axially and in height, associated with the dashboard (P) of a vehicle, comprising a first member (1; 1') mounted rigidly with the steering column and a second member (2; 2') mounted in the dashboard, **characterised in that** the two members (1, 2; 1', 2') are arranged so as to slide in one another, **in that** the second member (2; 2') is mounted in the dashboard so as to pivot about a transverse axis, **in that** the dashboard comprises upper (50; 50') and lower sides (51; 51'), **in that** the second member (2; 2') comprises upper (23; 23') and lower edges (25; 25') adjacent to the upper (50; 50') and lower sides (51; 51') and **in that** during pivoting movements of the second member about the transverse axis, the upper (50; 50') and lower sides (51; 51') and the upper (23; 23') and lower edges (25; 25') are arranged such that the upper edge (23; 23') follows the upper side (50; 50') remaining in the immediate vicinity of the latter and the lower side (51; 51') follows the lower edge (25; 25') remaining in the immediate vicinity of the latter.

2. A sheathing device for a steering column as claimed in claim 1, **characterised in that** the upper (50; 50') and lower sides (51; 51') of the dashboard comprise, in longitudinal section, substantially circular curvatures centred on the transverse axis.

3. A sheathing device for a steering column as claimed in claim 1 or 2, **characterised in that** the second member (2; 2') slides in the first member (1; 1').

4. A sheathing device for a steering column as claimed in one of claims 1 to 3, **characterised in that** the second member (2) is articulated about its transverse pivoting axis (Y-Y) in the dashboard (P).

5. A sheathing device for a steering column as claimed in claim 4, **characterised in that** the second member (2) comprises a main portion prolonged in the dashboard (P) by lateral arms (26) at the end of which it is articulated with respect to its pivoting axis (Y-Y).

6. A sheathing device for a steering column as claimed in claim 4 or 5, **characterised in that** it comprises ball bearings (4) between the facing walls of the members (1, 2) engaged in longitudinal throats (20) formed in at least one of these facing walls, to facilitate sliding between the members (1, 2).

7. A sheathing device for a steering column as claimed in one of claims 1 to 3, **characterised in that** the second member (2') is articulated so as to be able to pivot about a transverse axis corresponding substantially to the pivoting axis for the height adjustment of the steering column, by means of lateral lugs (28') engaged in circular arc slots (52') substantially centred on the transverse axis and guide means keeping it longitudinally aligned with the first member (1').

8. A device as claimed in claim 7, **characterised in that** the guide means adapted to maintain the longitudinal alignment between the first and second members (1', 2') comprise lateral sliding rules (15') of the first member (1') adapted to cooperate with guide rails of the second member, the rules (15') extending internally along the lateral walls (1'b), the guide rails being on either side of upper and lower inner rails formed respectively along the upper edge of a longitudinal slot (30') in the lateral wall (2'b) of the second member (2'), these rails comprising a throat (31') bounded internally by a rim (32').

9. A sheathing device for a steering column as claimed in claim 8, **characterised in that** the closed end portion of each of the two slots (30') comprises a film of material (33') connecting the rims (32') of the upper and lower throats (31') while enabling the passage in front of it of the associated sliding rule (15').

10. A sheathing device for a steering column as claimed in claim 8 or 9, **characterised in that** the passage openings (11') for the control handles in the lateral walls (1'b) of the member (1') traverse the sliding rules (15').
